(19) **Europäisches Patentamt**
**European Patent Office**
**Office européen des brevets**

(11) **EP 4 383 200 B1**

(12) **EUROPEAN PATENT SPECIFICATION**

(45) Date of publication and mention
of the grant of the patent:
**08.10.2025 Bulletin 2025/41**

(21) Application number: **23210272.3**

(22) Date of filing: **16.11.2023**

(51) International Patent Classification (IPC):
***G06T 7/80*** (2017.01)

(52) Cooperative Patent Classification (CPC):
**G06T 7/80;** G06T 2207/30232; G06T 2207/30244

(54) **SPATIAL CALIBRATION METHOD**

RÄUMLICHES KALIBRIERUNGSVERFAHREN

PROCÉDÉ D'ÉTALONNAGE SPATIAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.11.2022 GB 202217946**

(43) Date of publication of application:
**12.06.2024 Bulletin 2024/24**

(73) Proprietor: **CANON KABUSHIKI KAISHA**
**Tokyo 146-8501 (JP)**

(72) Inventors:
 • **RUELLAN, Hervé**
  **35700 RENNES (FR)**
 • **KERGOURLAY, Gérald**
  **35250 CHEVAIGNE (FR)**
 • **NASSOR, Eric**
  **35235 THORIGNE-FOUILLARD (FR)**

(74) Representative: **Casalonga**
 **31 Rue de Fleurus**
 **75006 Paris (FR)**

(56) References cited:
 **US-A1- 2021 295 559**

 • **TAKAHASHI KOSUKE ET AL: "Human Pose as
  Calibration Pattern: 3D Human Pose Estimation
  with Multiple Unsynchronized and Uncalibrated
  Cameras", 2018 IEEE/CVF CONFERENCE ON
  COMPUTER VISION AND PATTERN
  RECOGNITION WORKSHOPS (CVPRW), IEEE, 18
  June 2018 (2018-06-18), pages 1856 - 18567,
  XP033475533, DOI: 10.1109/CVPRW.2018.00230**
 • **LI BO ET AL: "A multiple-camera system
  calibration toolbox using a feature descriptor-
  based calibration pattern", 2013 IEEE/RSJ
  INTERNATIONAL CONFERENCE ON
  INTELLIGENT ROBOTS AND SYSTEMS(ROS),
  IEEE, OCTOBER 25-29, 2020, LAS VEGAS, NV,
  USA (VIRTUAL), 3 November 2013 (2013-11-03),
  pages 1301 - 1307, XP032537577, ISSN:
  2153-0858, [retrieved on 20131226], DOI: 10.1109/
  IROS.2013.6696517**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates generally to image processing systems and, more particularly, to methods and devices for spatially calibrating an image against another image.

BACKGROUND OF THE INVENTION

The deployment of camera-based surveillance systems has rapidly increased over the past decades to maximize safety and security. The large-scale deployment of camera-based surveillance systems has become possible thanks to a wide variety of technologies, related to both hardware and software aspects, making their deployment, management and monitoring efficient and cost-effective.

The use of camera-based surveillance systems has evolved from the simple task of detecting objects in a monitored area to more advanced applications concerned with the static and/or dynamic behaviors of the detected objects. Accurate metric information related to the detected objects is required to infer such behaviors. Examples of metric information of the detected objects include their dimensions and their kinematics, such as the position and the velocity, relatively to a global frame of reference, i.e., a frame of reference that is not attached to any of the surveillance cameras.

One known solution to determine metric information of objects appearing in an image relatively to a given frame of reference consists in making use of another image that is expressed in the given frame of reference, provided the existence of an overlapping area covered by the two images. In this case, a spatial calibration between the two images is performed, starting by establishing correspondences between specific points of the overlapping area in the two images. Then, a projection model between the two images is inferred based on pairs of corresponding points by solving for example a minimization problem. The inferred projection model may then be applied to each point of the image where the objects appear in order to get its position relatively to the given frame of reference, allowing the extraction of metric information.

Despite its feasibility in real scenarios, the performance of this solution is strongly dependent on several factors including, without limitation, the geometric features of the overlapping area and the quality of each of the two images. For example, when the extent of the overlapping area is narrow and/or when the two images are taken according to two different sets of capture parameters, including a field of view and a line of sight, the selection of the specific points, as well as their matching, cannot be achieved accurately. Furthermore, this inaccuracy may be increased if the quality of one or both of the two images is degraded because, for example, of weather conditions, such as rain or fog. Also, the technique used to carry out the selection and/or the matching of the specific points may have limitations or impairments susceptible to further increase the inaccuracy. These factors and others result in an approximate projection model that is unable to provide accurate metric information. US 2021/0295559 discloses a method for extrinsic calibration of a multi-camera system.

Thus, there is a need for an improved spatial calibration between two images that overcomes the limitations of the prior art.

SUMMARY

In accordance with a first aspect of the invention, there is provided a method for spatial calibration of a first image against a second image, the method comprising:

  obtaining a plurality of pairs of points of interest, each pair matching a point of interest in the first image to a corresponding point of interest in the second image;
  determining, iteratively, a projection model between the first and second images using pairs of points of interest of the obtained plurality; and
  calibrating the first image based on the determined projected model;

wherein an iteration of the determining comprising:

  displacing a position of a point of interest;
  determining a projection model candidate using multiple pairs of points of interest, the multiple pairs including the point of interest with the displaced position; and
  evaluating a reprojection error between the positions of the points of interest as projected using the projection model candidate and the corresponding points of interest;

the projection model being determined by choosing a projection model candidate based on the evaluated reprojection errors associated with a plurality of projection model candidates.

Accordingly, the method of spatial calibration allows an efficient and precise spatial calibration between two images despite the inaccuracy that occurs when selecting points of interest on the two images. This is achieved by exploring for one or more points of interest some or all of its direct and distant neighbors on the corresponding image.

In some embodiments, an iteration of the determining may comprise determining a projection model candidate using multiple pairs of points of interest as obtained at the obtaining step without displacing any position of one of their points of interest.

In some embodiments, the iterated steps of determining a projection model candidate and evaluating its associated reprojection error may be repeated for different sets of positions of the plurality of points of interest of one of the first or second images until a completion condition is fulfilled.

In some embodiments, for at least one point of interest, a set of positions may be explored, the set of positions comprises an initial position of the point of interest as obtained and one or more other positions resulting from displacing the position of the point of interest according to a displacement policy.

In some embodiments, the displacement policy may define a search area relatively to a reference position and one or more displacement lengths.

In some embodiments, the set of explored positions may be the positions reachable using the one or more displacement lengths within the search area where the reference position is the initial position.

In some embodiments, the set of explored positions may be the positions reachable using the one or more displacement lengths within a plurality of search areas determined iteratively, the reference position of an initial search area is the initial position and the reference position of a following search area is the position explored in a previous search area for which the corresponding reprojection error is the lowest or below a threshold.

In some embodiments, the method may further comprise selecting an enhanced position among the set of explored positions for a point of interest for which the corresponding reprojection error is the lowest or below a threshold.

Accordingly, using a displacement policy to manage the displacements of a point of interest allows the point of interest to approach its target position within a few displacements, which requires reduced resources in terms of storage and processing for its implementation.

In some embodiments, the method may further comprise, if the enhanced position is equal to the reference position for the point of interest:

updating the displacement policy; and repeating the iterated steps of determining a projection model candidate and evaluating its associated reprojection error with a new set of positions to be explored determined according to the updated displacement policy.

In some embodiments, updating the displacement policy may comprise reducing the one or more displacement lengths and narrowing the search area.

Accordingly, by updating the displacement policy in a spirit of refinement, it is possible to significantly reduce the reprojection error, as the points of interest are brought closer to their respective target positions, with respect to a scenario where the displacement policy is not updated.

In some embodiments, the completion condition may be fulfilled if one of the following conditions is fulfilled:

- all positions allowed by the displacement policy are explored;
- error below a threshold;
- number of iterations reached;
- all positions of a search area explored;
- all set of positions explored.

In some embodiments, the completion condition may be fulfilled if enhanced positions for all points of interest are equal to their corresponding reference positions.

In some embodiments, a projection model candidate may be determined by solving an optimization problem using the multiple pairs of points of interest.

In some embodiments, the projection model may be chosen as the projection model candidate associated with the lowest evaluated reprojection error.

In accordance with a second aspect of the invention, there is provided a processing device configured to perform the method according to any aspect or embodiment described above.

Any feature in one aspect of the invention may be applied to other aspects of the invention, in any appropriate combination. In particular, method aspects may be applied to apparatus/device/unit aspects, and vice versa.

Furthermore, features implemented in hardware may be implemented in software, and vice versa. Any reference to software and hardware features herein should be construed accordingly. For example, in accordance with other aspects of the invention, there are provided a computer program comprising instructions which, when the program is executed by a processing unit, cause the processing unit to carry out the method of any aspect or example described above and a computer readable storage medium carrying the computer program.

BRIEF DESCRIPTION OF THE DRAWINGS

Embodiments of the invention will now be described, by way of example only, and with reference to the following drawings in which:

Figures 1A and 1B illustrate examples of images to be spatially calibrated relatively to each other, according to embodiments of the invention;
Figure 2 is a flowchart of a method for spatial calibration of a first image against a second image, according to embodiments of the invention;
Figure 3 is a flowchart of a method for determining a projection model between two images, according to embodiments of the invention;
Figure 4 is a schematic diagram illustrating an imaging system in which the present invention may be implemented, according to embodiments of the invention;
Figure 5 is a flowchart of an elementary procedure for exploring multiple positions for a point of interest using a displacement policy, according to embodiments of the invention;

**Figure 6A** is a schematic diagram illustrating a displacement policy, according to embodiments of the invention;

**Figure 6B** and **6C** schematically illustrate, respectively, the use of a single search area and the use of multiple search areas to explore positions for a point of interest;

**Figures 7, 8** and **10** are flowcharts of methods for determining a projection model between two images, according to various embodiments of the invention;

**Figure 9** schematically illustrates an example of how the reference position of a point of interest evolves when implementing the method of **Figure 8,** according to embodiments of the invention;

**Figures 11A, 11B** and **11C** show examples of displacement policies, according to embodiments of the invention;

**Figure 12** schematically illustrates an example of how the reference position of a point of interest evolves when implementing the method of **Figure 10,** according to embodiments of the invention;

**Figure 13** is a schematic diagram of a processing device in which the present invention may be implemented, according to embodiments of the invention.

## DETAILED DESCRIPTION OF EMBODIMENTS

Embodiments of the present disclosure provide methods for spatial calibration of a first image against a second image, the two images covering at least partially a same scene, also referred to as common scene. Before applying such methods, each of the two images is expressed in an associated frame of reference, which means that the position of a point of one of the two images can be expressed by a set of coordinates in the frame of reference associated with the corresponding image. The objective of the spatial calibration is to provide a projection model between the first and second images allowing to express each point of one of the two images relatively to the frame of reference associated with the other image.

According to some embodiments of the invention, the first image is an uncalibrated image, whereas the second image is a calibrated image. The methods according to these embodiments thus concern the spatial calibration of an uncalibrated image against a calibrated image. The positions of the points of an uncalibrated image and the distances between them can only be expressed in terms of pixels in a frame of reference associated with the uncalibrated image. On the other hand, the calibrated image is expressed in an associated frame of reference which is not necessarily attached to the calibrated image. In such a scenario, the spatial calibration is required in order to express the position of each point of the uncalibrated image in the frame of reference in which the calibrated image is expressed.

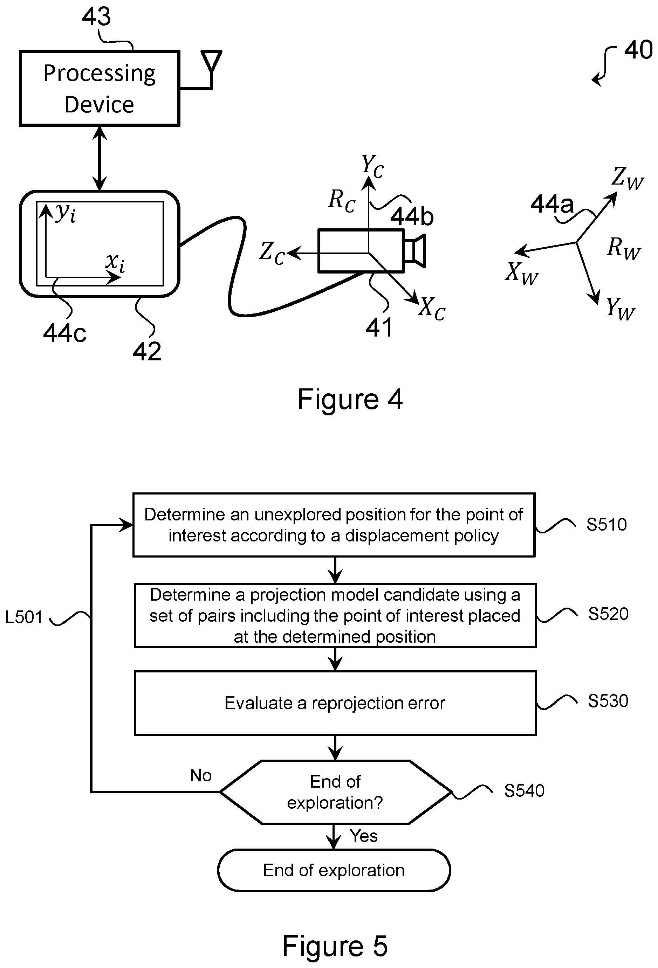

According to other embodiments of the invention, the first image is captured using an imaging device whose parameters are unknown. The methods according to these embodiments may be adapted to perform a camera resectioning process, also referred to as camera calibration process. Such a process aims at estimating the parameters, e.g., extrinsic and intrinsic parameters, of the imaging device used to capture the first image relatively to the frame of reference in which the second image is expressed. The camera calibration process is described in more detail below with reference to figure 4.

Methods according to various embodiments of the invention may be implemented in imaging systems used in a wide variety of applications. Exemplary applications comprise, without limitation, intelligent transport systems (ITS), aerospace and avionics, medical imaging, closed-circuit television (CCTV).

In the exemplary implementation of the invention in an ITS, images of roads and surroundings of the ITS may be spatially calibrated relatively to a world frame of reference in order to determine the kinematics of each object appearing in the taken images. This is useful to predict and/or to detect hazardous situations, and alert the ITS users thereof.

In the exemplary implementation of the invention in aerospace and avionics, images taken by a spacecraft may be spatially calibrated relatively to a world frame of reference in order to allow an accurate positioning of the spacecraft. This is particularly important in case of autonomous navigation.

For illustration purposes only, the following description of certain embodiments of the invention will be made with reference to ITS applications. However, the skilled person will readily understand that the various embodiments of the invention may be applied to various other applications.

For example, each of the first and second images may be a digital image that comprises a two-dimensional (2D) arrangement of pixels. Such a 2D arrangement of pixels may either be regular or irregular. Further, each of the pixels may comprise one or more components. For example, each of the pixels of a colored image may comprise three or more components corresponding to different colors, e.g., red, green and blue. In the case of a panchromatic or an infrared image, each pixel may comprise only one component.

In addition, each of the first and second images is taken in a way to capture the common scene according to a set of capture parameters. Examples of capture parameters include, without limitation, the field of view and the line of sight. The set of capture parameters according to which the first image is taken may be different from those according to which the second image is taken. Of course, the common scene may only be a part of each of the first and second images.

As mentioned above, each of the first and second images is expressed in an associated frame of reference. Each of the two frames of reference may be represented by a variety of coordinate systems, each of them specifying differently how to identify a point in the associated frame of reference. One type of coordinate system is a Cartesian coordinate system having three perpendicular axes x, y, and z. Another type of coordinate system is a spherical coordinate system. In the context of global positioning, an example of a global coordinate system is the WGS 84 (World Geodetic System 1984) used in GPS (Global Positioning System) as its reference coordinate system to express the coordinates of any point on or near the Earth surface as latitude, longitude and altitude. Another example of a global coordinate system is the UTM (Universal Transverse Mercator) that is based on dividing the Earth surface into zones and projecting each zone onto a plane.

Advantageously, the common scene may be chosen in a way to comprise one or more static objects, i.e., objects which are permanently stationary or present in the common scene. Such a criterion guarantees, if the first and second images are taken at different times, the appearance of the static objects in the two images. In the example of an ITS, the common scene may comprise, as static objects, multiple road surface markings used on paved roadways to provide guidance and information to drivers and pedestrians. The road surface markings may be of various geometric shapes and may include, without limitation, dashed lines, through and turn lane-use arrows, triangles, and pedestrian crossings. In the example of an ITS, static objects may also comprise, without limitation, curb borders, pedestrian or cyclist lane separation, traffic line, and road signal poles. Advantageously, one or more of the static objects may have at least one vertex.

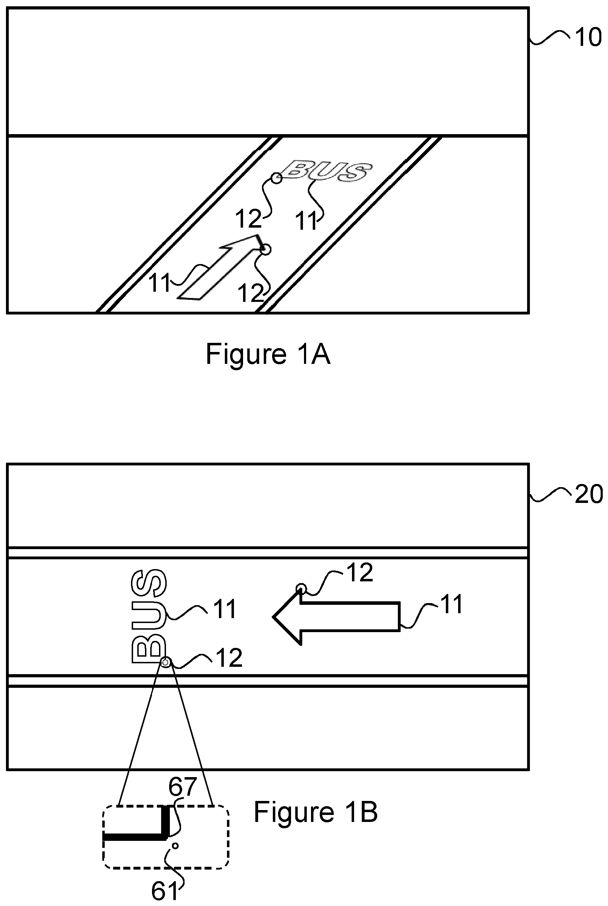

In some embodiments, one of the two images involved in the spatial calibration may be supplied to a processing device implementing the spatial calibration method directly after being taken by an imaging device or may temporarily be stored in a volatile or non-volatile memory medium after being taken by the imaging device. In the latter case, the processing device may be configured to access the memory medium in order to obtain the taken image. An example of a first image involved in the spatial calibration is shown in figure 1A. The first image 10 of figure 1A comprises as objects 11 of the common scene a through lane-use arrow and a painted text.

In other embodiments, one of the two images involved in the spatial calibration may be supplied to the processing device implementing the spatial calibration method by an external database server storing high-resolution images. The stored high-resolution images may be aerial images of type "top-down", i.e., bird's-eye view, and may be taken using aircrafts or satellites. Alternatively, the stored high-resolution images may be taken using stationary or mobile terrestrial imaging devices. An example of a second image involved in the spatial calibration is shown in figure 1B. The second image 20 of figure 1B comprises as objects 11 of the common scene a through lane-use arrow and a painted text.

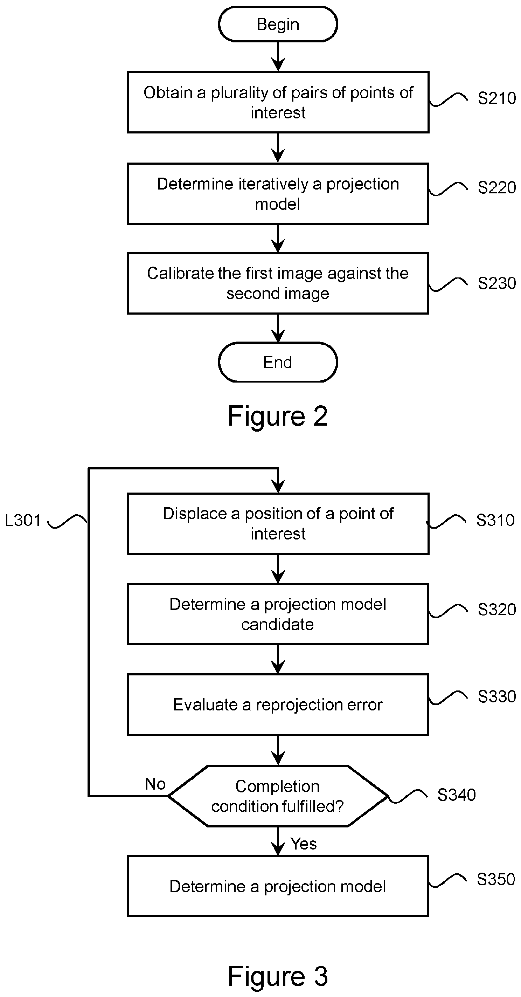

Figure 2 is a flowchart of a method for spatial calibration of a first image 10 against a second image 20, according to some embodiments of the invention. As mentioned above, the method may be implemented in a processing device that may be configured to receive the first and second images.

In step S210, multiple pairs of points of interest are obtained, each pair matching a point of interest on the first image 10 to a corresponding point of interest on the second image 20. Advantageously, step S210 may comprise a first sub-step consisting in selecting multiple points of interest on each of the first and second images, and a second sub-step consisting in matching the selected points of interest, thus obtaining the multiple pairs of points of interest.

For example, a point of interest may be selected, in the first sub-step of step S210, in a way to correspond to an object 11 of the common scene, i.e., an object 11 appearing in the first and second images. More precisely, depending on the shape of the corresponding object 11, a point of interest may correspond, without limitation, to a vertex or to the center of the corresponding object 11. When selecting a point of interest on an image, an initial position for the point of interest is determined by a set of coordinates in the frame of reference in which the image is expressed. In figures 1A and 1B, examples of points of interest 12 are shown and correspond to vertices of objects 11 of the common scene.

As illustrated in the zoomed-in area of figure 1B, when selecting a point of interest 12 on one of the two images, the initial position 61 determined for the point of interest 12 may not perfectly coincide with its target position 67, e.g., a vertex or the center of the corresponding object 11. This inaccuracy may be caused by one or more effects including, without limitation, weather conditions, e.g., rain or fog, making it difficult to clearly distinguish the target position 67, impairments and/or limitations of the techniques used to perform the sub-steps of step S210, the shape of the considered object 11 which may not have easily distinguishable vertices or centers, e.g., a curved object 11 of arbitrary shape.

In some embodiments, step S210 may be performed manually by providing an operator with two adjacent screens displaying respectively the first and second images. The operator may also be provided with means to select points of interest on the displayed images, and to match the selected points of interest, thus obtaining the multiple pairs of points of interest.

In other embodiments, step S210 may be performed in a fully automatic manner using one or more (deep) machine learning algorithms or one or more image analysis algorithms, or a combination of one or more of these algorithms. For example, a single machine learning algorithm or image analysis algorithm may be used to perform the two sub-steps of step S210. Alternatively, each of the two sub-steps of step S210 may be performed using a different machine learning algorithm or image analysis algorithm. Examples of machine learning algorithms comprise, without limitation, artificial neural networks. In such embodiments, a machine learning algorithm may first be trained using a set of images that may either be real or computer generated.

In further embodiments, step S210 may be performed according to a hybrid approach combining a manual implementation of one of the two sub-steps described above and an automatic implementation of the other sub-step.

In step S220, a projection model between the first and second images is determined iteratively using pairs of points of interest obtained in step S210. The projection model may be represented by a matrix of real or complex-valued elements whose dimensions, denoted M, N respectively, are constant. The value of an element of the matrix representing the projection model is, however, liable to change after each iteration performed in step S220. As stated above, the projection model may be used to express the position of each point of one of the two images in the frame of reference in which the other image is expressed. Consequently, the dimensions of the matrix representing the projection model, M and N, may depend on the number of coordinates required to express the position of a point in each of the two frames of reference.

Figure 3 is a flowchart illustrating a possible implementation of step S220 where one or more iterations of a loop comprising steps S310 to S340 described hereinafter may be executed.

In step S310, the position of a point of interest 12 from the obtained pairs is displaced with respect to the initial position 61 of the point of interest 12. This displacement may be performed according to a displacement direction and a displacement length which may both be chosen arbitrarily. Preferably, the position to which the point of interest 12 is displaced may be chosen in a way to not coincide with a position previously tested for the same point of interest 12.

In step S320, a projection model candidate is determined using multiple pairs of points of interest including the point of interest 12 whose position is displaced in step S310 of the current iteration of the loop L301 represented by steps S310 to S340. The used multiple pairs are also referred to as "calibration pairs" and may correspond to some or all of the pairs obtained in step S210. The projection model candidate may be determined, using the calibration pairs, by solving a minimization problem defined by a cost function and an optimization algorithm. The cost function may represent a quadratic sum of individual errors, each individual error being associated with one of the calibration pairs and measuring the distance between a point of interest 12 of the associated pair and the projection, using the current projection model, of the other point of interest 12 of the associated pair. Further, the optimization algorithm may terminate after a finite number of steps or until it converges closely enough to a solution. Examples of algorithms that terminate after a finite number of steps include, without limitation, simplex algorithm and quantum optimization algorithm. Examples of algorithms that converge to a solution include, without limitation, Newton's method and Gradient descent method. When solving a minimization problem as described above, the projection model candidate is the one associated with the minimum value of the cost function.

In some embodiments, when determining a projection model candidate in step S320, the points of interest of the calibration pairs, excepting the one whose position is displaced in step S310 of the current iteration of the loop L301, are placed at their initial positions 61 as provided in step S210.

In other embodiments, when determining a projection model candidate in step S320, a given point of interest 12 of the calibration pairs, which is different from the one whose position is displaced in step S310 of the current iteration of the loop L301, is placed at a position different from the corresponding initial position 61. This may only be allowed if one or more iterations of the loop L301 had been triggered with respect to the given point of interest 12, i.e., if one or more positions had been tested or explored for the given point of interest 12.

In step S330, a reprojection error between the positions of points of interest of one of the two images, as projected using the projection model candidate on the other image, and the corresponding points of interest is evaluated. The reprojection error may be evaluated, without limitation, using multiple pairs, also referred to as "projection pairs". The projection pairs may correspond, without limitation, to the calibration pairs used to determine the projection model candidate or to all the pairs obtained in step S210. For example, the reprojection error may be evaluated as the quadratic sum of individual errors, each individual error being associated with one of the projection pairs and measuring the distance between a point of interest 12 of the associated pair and the projection, using the projection model candidate, of the other point of interest 12 of the associated pair. One advantage of using the calibration pairs as projection pairs when evaluating the reprojection error is that the latter may already be calculated when determining the corresponding projection model candidate (step S320). Since reprojection errors evaluated at different iterations of the loop L301 may be compared to each other, it is preferable to keep the same projection pairs to evaluate each of the reprojection errors and/or to normalize each evaluated reprojection error by the corresponding number of projection pairs.

In step S340, a test is conducted by checking whether a completion condition is fulfilled. If the completion condition is fulfilled, the loop L301 is interrupted (algorithm terminated) and step S350 is then executed. Otherwise, a new iteration of the loop L301 is triggered. Examples of the completion condition include, without limitation, the lastly evaluated reprojection error is below a certain reprojection error threshold, the number of iterations of the loop L301 reaches a certain number of iterations threshold, at least one point of interest 12 of the obtained plurality of pairs of step S210 is tested at least once by displacing its position, all positions of a given search area are explored (tested) for each point of interest 12, all sets of positions defined for the points of interest 12 are explored, etc. Of course, the completion condition may be expressed as a combination of multiple elementary conditions, such as those listed above.

In some embodiments, a new iteration of the loop L301 is triggered with respect to a point of interest 12 different from the one tested in the current implementation of such a loop. A point of interest 12 tested in an implementation of the loop L301, or with respect to which an iteration of the loop L301 is triggered, is the one whose position is displaced in step S310 of the considered loop L301.

In other embodiments, a new iteration of the loop L301 is triggered with respect to a point of interest 12 different from the one tested in the current implementation of such a loop, only if an end of exploration condition is fulfilled. For example, the end of exploration condition may be related to the number of iterations of the loop L301 triggered with respect to the same point of interest 12 and/or to the lastly evaluated reprojection error.

In step S350, a projection model is determined by choosing a projection model candidate based on the evaluated reprojection errors associated with the already determined projection model candidates. For example and without limitation, the projection model may be chosen in a way to correspond to the determined projection model candidate that is associated with the lowest evaluated reprojection error.

Referring back to figure 2, in step S230, one of the first and second images is calibrated against the other image by using the determined projection model. Without loss of generality, it is assumed, in the rest of the description, that the spatial calibration methods, according to the various embodiments of the invention, aim at spatially calibrating the first image 10 against the second image 20. This is achieved by using the determined projection model to compute the position of each point of the first image 10 in the frame of reference in which the second image 20 is expressed. For example, such a computation may be performed at a pixel level by computing a position for each pixel of the first image 10. The computation may also be performed at a subpixel level by computing multiple positions for multiple respective points belonging to each pixel of the first image 10.

In some embodiments, at least one iteration of the loop L301 is performed so as to determine a projection model candidate corresponding to a configuration where each point of interest 12 of the calibration pairs is placed at its initial position 61 as provided in step S210.

In other embodiments, the loop L301 may be repeated for different sets of positions of the points of interest of one or more calibration pairs until the fulfillment of the completion condition. This may be achieved in step S320 of the multiple iterations of the loop L301 by considering different positions for a same point of interest 12 or for several points of interest of the one or more calibration pair. Such a same point of interest 12 of the one or more calibration pairs may be the one whose position is displaced in step S310 of each iteration of the loop L301.

Figure 4 illustrates an imaging system 40 in which a spatial calibration method may be implemented, according to some embodiments of the invention. The imaging system 40 comprises an imaging device 41 associated with a local frame of reference 44b and configured to take images of a given scene, a screen 42 adapted to show images taken by the imaging device 41 and a processing device 43 configured to implement the spatial calibration method.

The imaging device 41 may be placed in a hard-to-reach location, for security reasons and/or for a wider field of view, for example. This makes it difficult to directly access the imaging device 41 in order to obtain its parameters. More generally, the parameters of the imaging device 41, such as its location, are assumed to be unknown. This means that the position of a point of any taken image can only be expressed in terms of pixels in a frame of reference 44c attached to the screen 42 on which the taken image is shown.

The processing device 43 is configured to receive a first image 10 taken by means of the imaging device 41, and to receive a second image 20, by accessing an external database for example, covering a same captured scene as the first image 10. The second image 20 is expressed in an associated frame of reference 44a that may be a global frame of reference, such as the World Geodetic System (WGS) used in satellite navigation. Further, the processing device 43 is configured to implement the spatial calibration method based on a plurality of pairs of points of interest obtained from the first and second images.

The projection model obtained when applying the spatial calibration method to the first and second images may be used to estimate the parameters of the imaging device 41 used to take the first image 10 relatively to the frame of reference in which the second image 20 is expressed. This makes it possible to simply and remotely monitor the imaging device 41, spatially calibrating any other image taken by the imaging device 41 subsequent to the adjustment of any of its parameters, e.g., the field of view, etc. As mentioned above, the process of estimating the parameters of an imaging device 41 is also referred to as "camera resectioning" or "camera calibration".

In order to estimate the parameters of the imaging device 41 used to take the first image 10 relatively to the frame of reference associated with the second image 20, the projection model returned by the spatial calibration method is designed to be represented by a real-valued $(3 \times 4)$ projection matrix [M] derived from a matrix of extrinsic parameters [T] and a matrix of intrinsic parameters [K], according to following expression:

$$s.\{x_s\} = [K][\mathrm{T}]\{X_W\} = [\mathbf{M}]\{X_W\}$$

$\{X_w\} = \{X_W, Y_W, Z_W, 1\}^T$ represents the homogeneous 3D coordinates of a point P of the captured scene as expressed in the frame of reference 44a associated with the second image 20, $\{x_s\} = \{x_s, y_s, 1\}^T$ represents the homogenous 2D coordinates of the projection of the point P on the first image 10 as expressed in the frame of reference 44c associated with the first image 10, s is an arbitrary scaling factor, [T] and [K] are respectively given by:

$$[\mathbf{T}] = \begin{bmatrix} [R] & \{t\} \\ \{\mathbf{0}_{1\times3}\} & 1 \end{bmatrix} \text{ and } [\mathbf{K}] = \begin{bmatrix} f_x & \gamma & c_x & 0 \\ 0 & f_y & c_y & 0 \\ 0 & 0 & 1 & 0 \end{bmatrix}$$

[T] is a 4-order matrix which may be decomposed into a rotation matrix [R] (parametrized, for example, by three angles of rotation) and a translation vector {t} (defined by three translation components). These six parameters (three angles of rotation and three translation components) are also referred to as extrinsic parameters and define the position of the imaging device 41 in the frame of reference 44a associated with the second image 20. [K] is a real-valued (3 × 4) matrix involving five intrinsic parameters of the imaging device 41: the horizontal ($f_x$) and vertical ($f_y$) focal lengths in pixels, the position of the optical center in pixels $(c_x, c_y)$, and the skew coefficient y which is non-zero if the first image 10 axes are not perpendicular.

The projection matrix [M] may either be expressed implicitly as a (3 × 4) matrix containing 12 terms, or explicitly, via the 11 independent extrinsic and intrinsic parameters presented above.

Advantageously, the projection model returned by the spatial calibration method may also be designed to further include distortions caused by imperfections in the optical part of the imaging device 41. Such distortions may include, without limitation, radial and tangential lens distortions.

Figure 5 is a flowchart illustrating an elementary procedure for exploring multiple positions for a point of interest 12 of an obtained pair using a displacement policy, according to some embodiments of the invention. Given a current position for the point of interest 12, also referred to as "reference position", the displacement policy defines the possible positions on the corresponding image to which the point of interest 12 may be displaced when applying the elementary procedure. The reference position of the point of interest 12 may be for example its initial position 61 as obtained in step S210. The elementary procedure comprises one or more iterations of a loop L501 of multiple steps, the loop L501 comprising steps S510 to S540.

In step S510, an unexplored position for the point of interest 12 is determined on the corresponding image according to the displacement policy. An unexplored position stands for a position at which the point of interest 12 has not yet been placed. More precisely, the unexplored position is determined with respect to the reference position of the point of interest 12 along a displacement direction and according to a displacement length, which are both specified by the displacement policy.

In step S520, a projection model candidate is determined using a set of calibration pairs including the point of interest 12 to which the elementary procedure is applied, such a point of interest 12 being placed at the unexplored position determined in step S510 of the current iteration of the loop L501. As explained above with reference to step S320, a projection model candidate may be determined, giving the calibration pairs, by solving a minimization problem defined by a cost function and an optimization algorithm. For example, the same set of calibration pairs and/or the same minimization problem may be used in each iteration of the loop L501.

In step S530, a reprojection error between the positions of points of interest of one of the two images, as projected using the determined projection model candidate on the other image, and the corresponding points of interest is evaluated. The reprojection error may be evaluated, without limitation, by using the calibration pairs or all the pairs obtained in step S210 as projection pairs. In addition, each evaluated reprojection error may be normalized by the corresponding number of projection pairs and/or the same set of projection pairs may be used in each iteration of the loop L501. Advantageously, step S530 may further comprise storing in a memory medium the determined projection model candidate, together with the corresponding evaluated reprojection error and the corresponding explored position of the point of interest 12.

In step S540, a test is conducted by checking whether an end of exploration condition is fulfilled. If the end of exploration condition is fulfilled, the loop L501 is interrupted and the elementary procedure applied to the point of interest 12 ends. Otherwise, a new iteration of the loop L501 is triggered. Examples of the end of exploration condition include, without limitation, the exploration of all the possible positions for the point of interest 12 as given by the displacement policy, the lastly evaluated reprojection error is below a certain reprojection error threshold, the lastly evaluated reprojection error corresponds to a reduction by at least a reduction factor threshold with respect to the firstly evaluated reprojection error, etc. Of course, the end of exploration condition may be expressed as a combination of multiple elementary conditions, such as those listed above.

In some embodiments, the elementary procedure of figure 5 may successively be applied to multiple points of interest of the obtained plurality of pairs in order to perform step S220. For example, the elementary procedure may be applied at least once to one point of interest 12 of each of the obtained plurality of pairs.

In other embodiments, the elementary procedure of figure 5 may be applied to a same point of interest 12 multiple times, by changing each time, without limitation, the reference position of the point of interest 12.

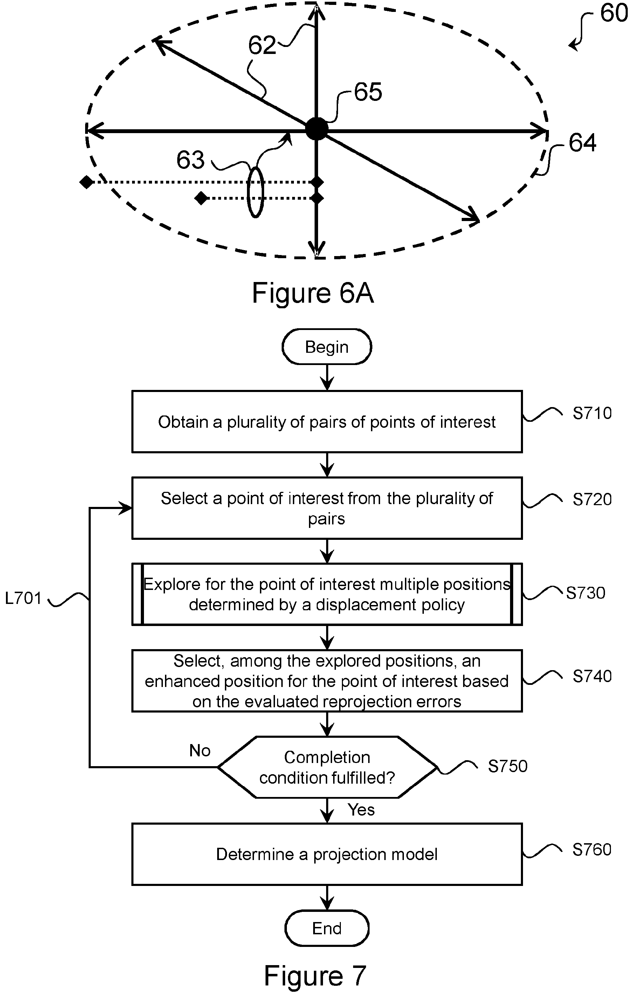

Figure 6A schematically illustrates a displacement policy 60, according to some embodiments of the invention. The displacement policy 60 gives all the reachable (possible) positions for a point of interest 12 when performing a single displacement starting from a reference position 65 of the point of interest 12. To do so, the displacement policy 60 comprises a set of displacement parameters, each of them may have one or more values.

The displacement parameters may comprise a displacement direction parameter specifying all the allowed directions of displacement 62 that may be explored for a point of interest 12. For example, the allowed directions of displacement 62 may comprise the four main directions, i.e., left, right, up and down. They may also comprise one or two diagonal directions. More generally, the allowed directions of displacement 62 may be specified as angles comprised between 0 and 360 degrees considering an arbitrary direction, e.g., the right direction, as corresponding to 0 degree. The common vertex of such angles is the reference position 65 of the point of interest 12. In the illustrative example of figure 6A, a total of 6 allowed directions of displacement 62 are specified by the displacement direction parameter.

The displacement parameters further comprise a displacement length parameter specifying, for each allowed direction of displacement 62, one or more displacement lengths 63. A displacement length 63 of an allowed displacement direction 62 gives the accurate position to which the point of interest 12 may be displaced, the displacement being conducted along the allowed direction of displacement 62 and starting from the reference position 65 of the point of interest 12. Of course, the displacement length parameter may specify one or more displacement lengths 63 without associating them with any allowed direction of displacement 62. In this case, an unassociated displacement length 63 applies to all the allowed directions of displacement 62. In the illustrative example of figure 6A, two different displacement lengths 63 are associated with the allowed direction of displacement 62 pointing to the left.

The displacement parameters may also comprise a search area 64. The search area 64 includes the reference position 65 of the point of interest 12 and its extent along each allowed direction of displacement 62 is given by the longest associated displacement length 63. The search area 64 may, without limitation, have the shape of any geometric form. In the illustrative example of figure 6A, the search area 64 has the shape of an ellipse centered on the reference position 65 of the point of interest 12.

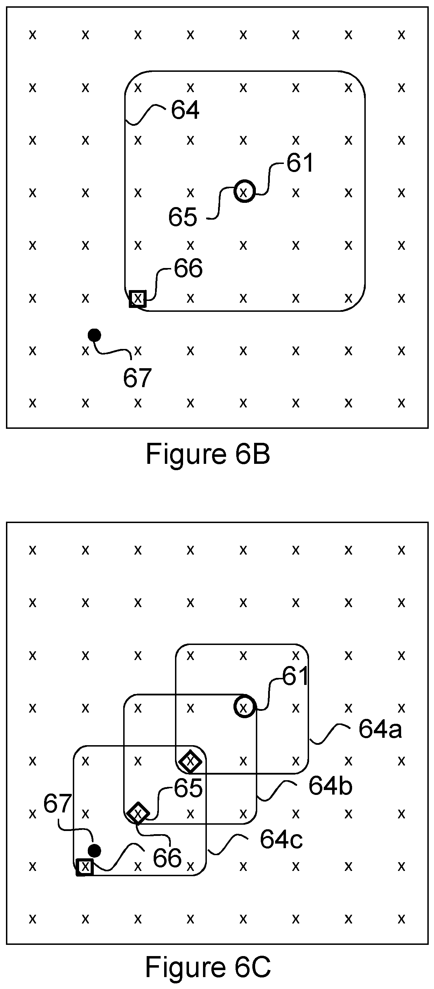

In some embodiments of the invention, only the positions within a single search area 64 of the displacement policy 60 applied to a point of interest 12 placed at its initial position 61 are allowed to be explored. This is illustrated in figure 6B where only one search area 64 is defined even if the target position 67 of the point of interest 12 is located outside the search area 64. In this scenario, only one reference position 65 is defined for the point of interest and is set to its initial position 61. When applying the elementary procedure of figure 5 to the point of interest 12 using the displacement policy 60, an enhanced position 66 for the selected point of interest 12 is determined, for example and without limitation, as the explored position associated with the lowest evaluated reprojection error.

In other embodiments of the invention, several search areas 64 are used to explore positions for a point of interest 12 initially defined by its initial position 61. This scenario is illustrated in figure 6C where several search areas 64a, 64b, 64c are defined for the point of interest 12. The reference position for the point of interest 12, which gives, together with the current search area, the positions to be explored, is initialized to the initial position 61 of the point of interest 12. This reference position 65 may be updated using the lastly determined enhanced position 66. For example, the enhanced position 66 determined within a current search area 64b may be used as the reference position 65 for the next search area 64c.

Figure 7 is a flowchart of a method for determining a projection model between two images, according to some embodiments of the invention. The determined projection model may be used to spatially calibrate one of the two images against the other image and/or to calibrate the imagining device used to take one of the two images relatively to the frame of reference in which the other image is expressed.

In step S710, a plurality of pairs of points of interest is obtained. Each of the obtained pairs matches a point of interest 12 of one of the two images to a corresponding point of interest 12 of the other image. Each point of interest 12 of the obtained plurality of pairs is defined by a reference position 65 initialized to an initial position 61 expressed in the frame of reference associated with the corresponding image. As explained above, when selecting a point of interest 12 on one of the two images, errors of various origins may occur causing a deviation between the selected initial position 61 of the point of interest 12 and its target position 67.

Subsequently to step S710, the method of figure 7 comprises a loop L701 represented by steps S720 to S750. In step S720, a point of interest 12 is selected from the obtained plurality of pairs. For example, the selection may be made considering the points of interest of one or both images. The selection may also be made arbitrarily or according to a predetermined selection strategy. A first example of a selection strategy may consist, without limitation, to select, in the current iteration of the loop L701, the closest or the farthest point of interest 12 on the same image with respect to the point of interest 12 selected in the previous iteration of the loop L701. A second example of a selection strategy may consist in ordering the obtained plurality of pairs according to a given ordering criterion, such as the distance to the center of one of the two images, and in selecting, in a current iteration of the loop L701, a point of interest by respecting the order of the corresponding pair in the ordered list of pairs. The selection may be blocked or restarted from the first pair of the ordered list after selecting the last pair of the ordered list. A third example of a selection strategy may consist in selecting, in a current iteration of the loop L701, a point of interest 12 from the pair for which the evaluated reprojection error, as computed when applying the elementary procedure of figure 5 to such a pair, is the largest among other obtained pairs.

In step S730, multiple positions on the corresponding image are explored for the selected point of interest 12 according to a displacement policy 60. For example, the exploration may be performed by applying to the selected point of interest 12 an elementary procedure, such as one described with reference to figure 5. More generally, for each explored position for the selected point of interest 12, a projection model candidate and an associated reprojection error are determined using respectively a set of calibration pairs including the selected point of interest 12 and a set of projection pairs. The calibration pairs and the projection pairs are chosen from the obtained plurality of pairs, and may be the same set of pairs. In particular, in step S730 of an iteration of the loop L701, a projection model candidate and an associated reprojection error are determined for the reference position 61 of the selected point of interest 12.

In step S740, an enhanced position 66 for the selected point of interest 12 is selected among the explored positions of the current iteration of the loop L701, based on the evaluated reprojection errors.

In one aspect of step S740, the enhanced position 66 is selected as the explored position corresponding to the lowest evaluated reprojection error among all the explored positions for the selected point of interest 12. Of course, the enhanced position 66 of the selected point of interest 12 may be its reference position 65.

In another aspect of step S740, the enhanced position 66 of the selected point of interest 12 is selected, among the explored positions of the current iteration of the loop L701, so as to be any explored position whose associated evaluated reprojection error is below a certain reprojection error threshold. If none of the explored positions satisfies such a condition, the enhanced position may be selected in a way to correspond to the lowest evaluated reprojection error among all the explored positions for the selected point of interest 12, or in a way to coincide with its reference positions 65.

Step S740 may further comprise storing in a memory medium the enhanced position 66 of the selected point of interest 12, together with the associated projection model candidate and the associated reprojection error. The initial positions 61 may be kept in the memory medium for later use; for example, for determining a projection model candidate using the initial positions 61 of the other points of interest while using the enhanced position for the currently selected point of interest 12. Alternatively, when storing an enhanced position 66 for a selected point of interest 12, any other stored position for the selected point of interest 12 may be deleted. This may include, without limitation, the initial position 61 and any previously determined enhanced position 66. The stored enhanced positions 66 of the selected points of interest may be used in step S760 to directly compute the projection model between the two images from a set of calibration pairs, and/or may be used while repeating the loop L701 to compute other projection model candidates. In this latter scenario, the enhanced position 66 of a given point of interest 12 determined in a current iteration of the loop L701 may be used to update its reference position 65 (the reference position 65 is set to the enhanced position 66) when the given point of interest 12 is selected, once again, in a new iteration of the loop L701 and/or when the given point of interest 12 is part of a calibration pair or of a projection pair used in a new iteration of the loop L701.

In step S750, a test is conducted by checking whether a completion condition is fulfilled. If the completion condition is fulfilled, the loop L701 is interrupted and step S760 is then executed. Otherwise, a new iteration of the loop L701 is triggered. Examples of the completion condition include, without limitation, the lastly evaluated reprojection error is below a certain reprojection error threshold, the number of iterations of the loop L701 reaches a certain number of iterations threshold, an enhanced position 66 is selected for at least one point of interest 12 of each of the obtained plurality of pairs, etc. Of course, the completion condition may be expressed as a combination of multiple elementary conditions, such as those listed above.

In step S760, a projection model is determined by choosing a projection model candidate based on the evaluated reprojection errors associated with the already determined projection model candidates.

In one aspect of step S760, the projection model may be chosen in a way to correspond to the determined projection model candidate associated with the lowest evaluated reprojection error among all the determined projection model candidates. This allows avoiding the computation complexity associated with computing a new projection model from a set of calibration pairs, and is particularly advantageous when a projection model candidate is determined using points of interest 12 placed at their respective enhanced positions 66.

In another aspect of step S760, the projection model is determined by choosing a projection model candidate that is not determined while repeating the loop L701. The chosen projection model candidate, in this other aspect, may be computed using a set of calibration pairs whose points of interest have been selected while repeating the loop L701. More precisely, the points of interest 12 of the calibration pairs placed at their respective enhanced positions 66 may be used to compute the projection model between the two images. This is particularly advantageous when the enhanced position 66 of a point of interest 12 is determined while keeping the other points of interest 12 of the associated set of calibration pairs at their respective initial positions 61.

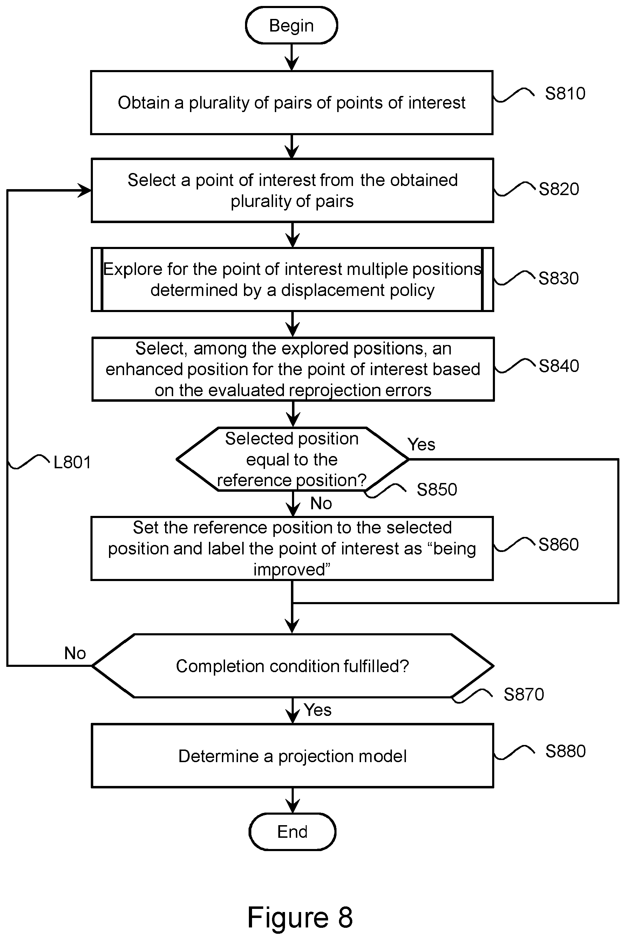

Figure 8 is a flowchart of a method for determining a projection model between two images, according to other embodiments of the invention. As mentioned above, the determined projection model may be used, without limitation, to spatially calibrate one of the two images against the other image.

In step S810, a plurality of pairs of points of interest is obtained. Each of the obtained pairs matches a point of interest 12 of one of the two images to a corresponding point of interest 12 of the other image. Each point of interest 12 of the obtained plurality of pairs is defined by a reference position 65 initialized to an initial position 61 that may deviate from the target position 67 of the point of interest 12, as errors may occur when selecting and/or matching the points of interest of the obtained plurality of pairs.

Subsequently to step S810, the method of figure 8 comprises a loop L801 consisting of steps S820 to S870. In step S820, a point of interest 12 is selected from the obtained plurality of pairs. For example, the selection may be made arbitrarily or according to a selection strategy by considering points of interest of one or both of the two images.

In step S830, multiple positions, including its reference position 65, on the corresponding image are explored for the selected point of interest 12 according to a displacement policy 60. For example, the exploration may be performed by applying to the selected point of interest 12 an elementary procedure, such as one described with reference to figure 5. More generally, for each explored position for the selected point of interest 12, a projection model candidate and an associated reprojection error are determined using respectively a set of calibration pairs including the selected point of interest 12 and a set of projection pairs. The calibration pairs and the projection pairs are chosen from the obtained plurality of pairs, and may be the same set of pairs.

In step S840, an enhanced position 66 for the selected point of interest 12 is selected among the explored positions of the current iteration of the loop L801, based on the evaluated reprojection errors. For example, the enhanced position 66 may be selected as the explored position corresponding to the lowest evaluated reprojection error among all the explored positions for the selected point of interest 12. Of course, the enhanced position 66 of the selected point of interest 12 may be its reference position 65 used by the displacement policy 60 to determine the explored positions in step S830 of the current iteration of the loop 801. Advantageously, step S840 may further comprise storing in a memory medium the enhanced position 66 of the selected point of interest 12, together with the associated projection model candidate and the associated reprojection error.

In step S850, a test is conducted by comparing for the selected point of interest 12 its reference position 65 with its enhanced position 66 as selected in step S840. The result of such a test is positive or negative depending on whether the reference position 65 and the enhanced position 66 coincide or differ from each other, respectively. For a point of interest 12 selected for the first time in step S820 when repeating the loop L801, the associated reference position 65 is its initial position 61 as given in step S810. Depending on the result of such a test, one of the two steps S860 and S870 is executed next.

In step S860 performed in the case of a negative result of the conducted test of step S850, an adjustment of the reference position 65 of the selected point of interest 12 is performed by setting its value to the enhanced position 66, as selected in step S840. Further, step S860 comprises labelling the selected point of interest 12 as "being improved". In fact, a negative result of the conducted test of step S850 reflects that the enhanced position 66 is still most likely different from the target position 67 of the selected point of interest 12. Further, the labelling "being improved" associated with a selected point of interest 12 may only be removed in step S850 of a new iteration of the loop L801 triggered with respect to this selected point of interest 12, if the result of the conducted test of step S850 is positive.

In step S870, performed subsequently to step S860 or directly after step S850 if the result of the conducted test of step S850 is positive, it is checked whether a completion condition is fulfilled or not. If the completion condition is fulfilled, the loop L801 is interrupted and step S880 is then executed. Otherwise, a new iteration of the loop L801 is triggered. According to embodiments of the invention described with reference to figure 8, the completion condition is a combination of multiple elementary conditions. An example of a first elementary condition is related to the reprojection error and is fulfilled if the lastly evaluated reprojection error is below a certain reprojection error threshold. An example of a second elementary condition is related to the selected points of interest and is fulfilled if none of the selected points of interest is labelled "being improved". An example of a third elementary condition is related to the pairs of points of interest and is fulfilled if the number of processed, i.e., tested, pairs exceeds a certain number of processed pairs threshold. For example, the completion condition of step S870 is fulfilled if at least one of the elementary conditions is satisfied.

In step S880, a projection model is determined by choosing a projection model candidate based on the evaluated reprojection errors associated with the already determined projection model candidates. In a first aspect of step S880, the projection model may be chosen in a way to correspond to the determined projection model candidate associated with the lowest evaluated reprojection error. In a second aspect of step S880, the projection model may be a projection model candidate computed in step S880 using a set of calibration pairs whose points of interest 12 are at their respective reference positions 65.

In some embodiments, a common displacement policy 60 may be used to perform each iteration of the loop L801. The parameters of the common displacement policy 60 may be chosen in a way to get a compromise between accuracy, as reflected by the evaluated reprojection errors, and computational complexity, as given by the number of explored positions for each selected point of interest 12.

In other embodiments compatible with the first and second aspects of step S880, a pair of points of interest used as a calibration pair and/or as a projection pair in a current iteration of the loop L801, excepting the one whose point of interest 12 is selected, is configured so as its points of interest 12 are located at their reference positions 65, i.e., at their lastly determined enhanced positions 66.

In further embodiments compatible with the second aspect of step S880, a pair of points of interest used as a calibration pair and/or as a projection pair in a current iteration of the loop L801, excepting the one whose point of interest 12 is selected, is configured so as its points of interest 12 are located at their initial positions 61.

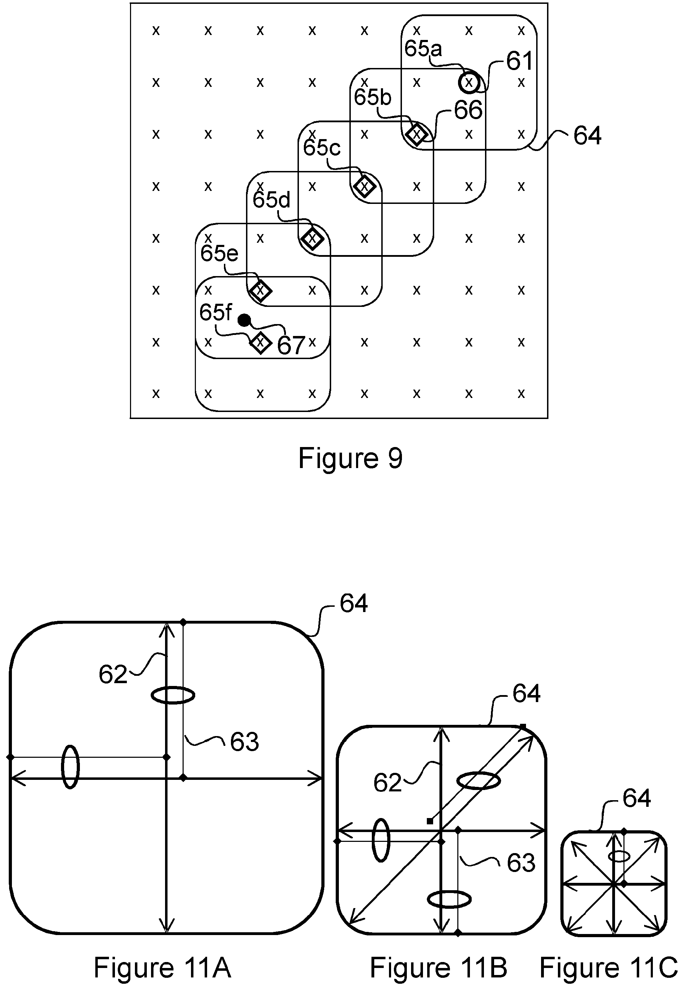

Figure 9 schematically illustrates an example of how the reference position 65 of a given point of interest 12 evolves between the corresponding initial and target positions when applying the method of figure 8 with a completion condition fulfilled if none of the selected points of interest is labelled "being improved". The used displacement policy 60 allows exploring, in an iteration of the loop L801, the reference position 65 of a selected point of interest 12, as well as its direct neighbors. Each iteration of the loop L801 triggered with respect to the given point of interest 12 brings its reference position 65 closer to its target position 67 (65a to 65f). In particular, the label "being improved" of the given point of interest 12 is only removed in the sixth iteration of the loop L801 (65f), as the first five iterations of the loop L801 results in the adjustment of the reference position 65 of the given point of interest 12.

The embodiments described with reference to figure 8 require only a few iterations of the loop L801 to bring the reference position 65 of each selected point of interest 12 close to its target position 67. They also allow processing in two successive iterations of the loop L801 two points of interest belonging to two different pairs. These features lead to a rapid decrease in the evaluated reprojection error. Such embodiments are particularly advantageous when it is necessary to determine a projection model between two images in a short period of time or when the allocated resources to this task in terms of storage and/or processing are limited.

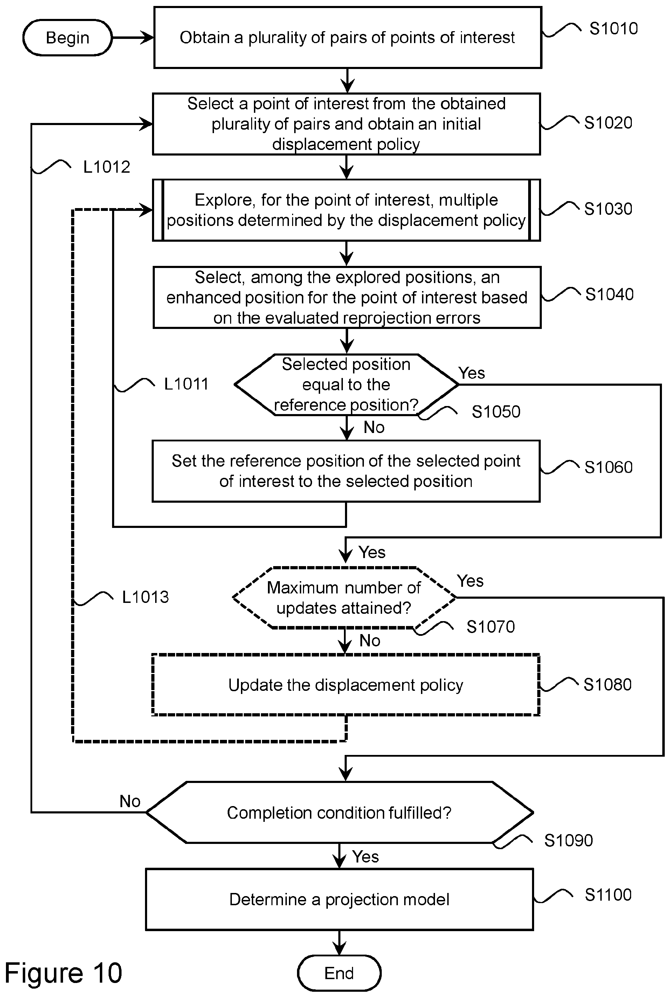

Figure 10 is a flowchart of a method for determining a projection model between two images, according to further embodiments of the invention. As mentioned above, the determined projection model may be used, without limitation, to calibrate the imagining device used to take one of the two images relatively to the frame of reference in which the other image is expressed.

The method of figure 10 comprises an inner loop L1011 and an outer loop L1012 represented, respectively, by steps S1030 to S1060 and by steps S1020 to S1090. The method of figure 10 starts with step S1010 that comprises obtaining a plurality of pairs of points of interest. Each of the obtained pairs matches a point of interest 12 of one of the two images to a corresponding point of interest 12 of the other image. Each point of interest 12 of the obtained plurality of pairs is defined by a reference position 65 initialized to an initial position 61 that may deviate from the target position 67 of the point of interest 12, as errors may occur when selecting and/or matching the points of interest of the obtained plurality of pairs.

In step S1020, a point of interest 12 is selected from the obtained plurality of pairs. For example, the selection may be made arbitrarily or according to a selection strategy by considering points of interest of one or both of the two images. Further, step S1020 comprises obtaining an initial displacement policy 60. Subsequent to step S1020, an iteration of the inner loop L1011 is triggered with respect to the selected point of interest 12.

In step S1030 of the inner loop L1011, multiple positions, including its reference position 65, on the corresponding image are explored for the selected point of interest 12 according to the initial displacement policy 60. For example, the exploration may be performed by applying to the selected point of interest 12 an elementary procedure, such as one described with reference to figure 5. More generally, for each explored position for the selected point of interest 12, a projection model candidate and an associated reprojection error are determined using respectively a set of calibration pairs including the selected point of interest 12 and a set of projection pairs. The calibration pairs and the projection pairs are chosen from the obtained plurality of pairs, and may be the same set of pairs.

In step S1040 of the inner loop L1011, an enhanced position 66 for the selected point of interest 12 is selected among the explored positions of the current iteration of the inner loop L1011, based on the evaluated reprojection errors. For example, the enhanced position 66 may be selected as the explored position corresponding to the lowest evaluated reprojection error among all the explored positions for the selected point of interest 12. Advantageously, step S1040 may further comprise storing in a memory medium the enhanced position 66 of the selected point of interest 12, together with the associated projection model candidate and/or the associated reprojection error.

In step S1050 of the inner loop L1011, a test is conducted by comparing for the selected point of interest 12 its reference position 65 with its enhanced position 66 as selected in step S1040. The result of such a test is positive or negative depending on whether the reference position 65 and the enhanced position 66 coincide or differ from each other, respectively. For a point of interest 12 selected for the first time in step S1020 when repeating the outer loop L1012, the associated reference position 65 is its initial position 61 as given in step S1010. In case of a positive result of the conducted test of step S1050, the inner loop L1011 is interrupted. Otherwise, step S1060 of the inner loop L1011 is executed before triggering a new iteration of the inner loop L1011 with respect to a same selected point of interest 12 and a same displacement policy 60 as the current iteration of the inner loop L1011.

In step S1060 of the inner loop L1011, an adjustment of the reference position 65 of the selected point of interest 12 is performed by setting its value to the enhanced position 66, as selected in step S1040. Thus, the new iteration of the inner loop L1011, triggered subsequently to step S1060, is performed by only adjusting the reference position 65 of the selected point of interest 12. By repeating the inner loop L1011 with respect to a same selected point of interest 12 until a positive result of the conducted test of step S1050 is achieved, each iteration of the inner loop L1011 brings the enhanced position 66 of the selected point of interest 12 closer to its target position 67. This leads to a significant decrease in the evaluated reprojection error.

In some embodiments, step S1090 is executed directly after interrupting the inner loop L1011 by checking whether a completion condition is fulfilled or not. If the completion condition is fulfilled, the outer loop L1012 is interrupted and step S1100 is then executed. Otherwise, a new iteration of the outer loop L1012 is triggered with respect to an unprocessed point of interest 12, the latter being a point of interest 12 not yet selected in the previous iterations of the outer loop L1012, the initial displacement policy being used when executing the step S1020. Examples of the completion condition include, without limitation, the lastly evaluated reprojection error is below a certain reprojection error threshold, the number of iterations of the outer loop L1012 reaches a certain number of iterations threshold, etc. Of course, the completion condition may be expressed as a combination of multiple elementary conditions, such as those listed above.

In other embodiments, optional steps S1070 and S1080, showed in dotted lines in figure 10, are executed after interrupting the inner loop L1011. Such two optional steps, S1070 and S1080, may only be performed if updating the displacement policy 60 is authorized. Together with the inner loop L1011, the two optional steps, S1070 and S1080, constitute the loop L1013 that may be repeated for a same selected point of interest 12.

In the optional step S1070, it is checked whether or not a maximum number of changes (updates) of the displacement policy 60 is reached for the selected point of interest 12. If such a maximum number is not yet reached, the optional step S1080 is executed and a new iteration of the loop L1013 is then triggered with respect to the same selected point of interest 12. Otherwise, the loop L1013 is interrupted and step S1090 is then executed.

In the optional step S1080, the displacement policy 60 is updated and used to perform the new iteration of the loop L1013. The updating of the displacement policy 60 may be carried out in a spirit of refinement. For example, the new displacement policy 60 may be inferred from the previous one by narrowing the search area 64, shortening the displacement lengths 63 and/or increasing the number of allowed directions of displacement 62. Step S1080 further comprises computing the number of updates of the displacement policy 60 since the initial displacement policy 60.

Figure 11A schematically illustrates an example of an initial displacement policy 60 with four allowed directions of displacement 62. Figures 11B and 11C show two updated displacement policies inferred, respectively, from the one of figure 11A and from the one of figure 11B by narrowing the search area 64, shortening the displacement lengths 63 and increasing the number of allowed directions of displacement 62.

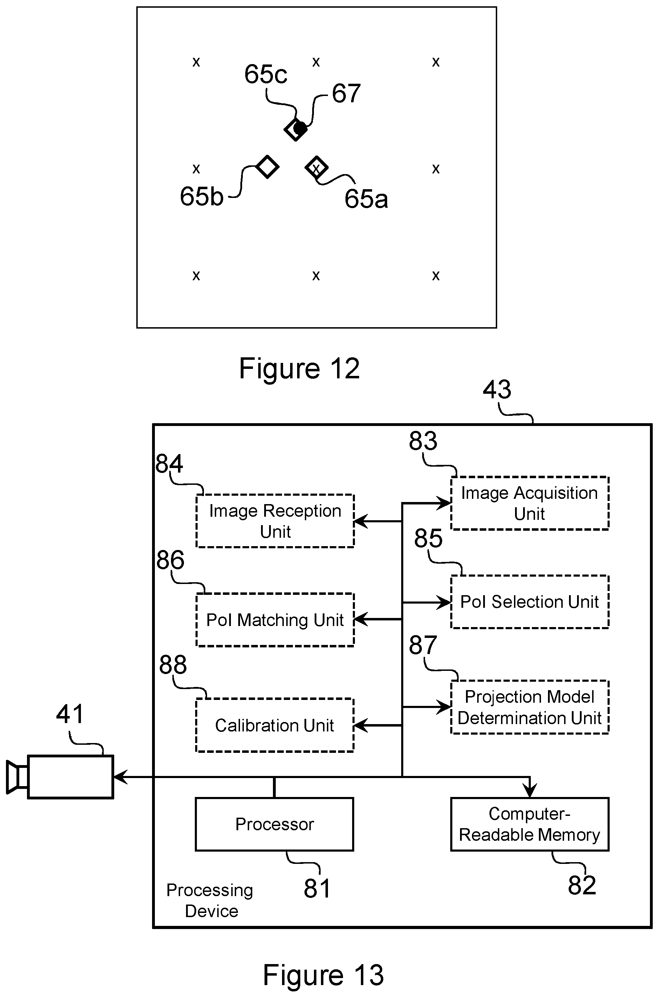

Figure 12 schematically illustrates an example of how the reference position 65 of a selected point of interest 12 evolves after each updating of the displacement policy 60 (from 65a to 65c). By updating the displacement policy 60 in a spirit of refinement, as illustrated in figures 11A, 11B and 11C, it is possible to coincide the reference position 65 of a selected point of interest with its target position 67. This leads to a significant decrease in the evaluated reprojection error.

Referring back to figure 10, in step S1100, a projection model is determined by choosing a projection model candidate based on the evaluated reprojection errors associated with the already determined projection model candidates. In a first aspect of step S1100, the projection model may be chosen in a way to correspond to the determined projection model candidate associated with the lowest evaluated reprojection error. In a second aspect of step S1100, the projection model may be a projection model candidate computed in step S1100 using a set of calibration pairs whose points of interest 12 are at their respective reference positions 65.

In some embodiments compatible with the first and second aspects of step S1100, a pair of points of interest used as a calibration pair and/or as a projection pair in a current iteration of the loop L1012, excepting the one whose point of interest 12 is selected, is configured so as its points of interest 12 are located at their reference positions 65, i.e., at their lastly determined enhanced positions 66.

In other embodiments compatible with the second aspect of step S1100, a pair of points of interest used as a calibration pair and/or as a projection pair in a current iteration of the loop L1012, excepting the one whose point of interest 12 is selected, is configured so as its points of interest 12 are located at their initial positions 61.

In some embodiments, the inner loop L1011 of figure 10 is modified in a way to include step S1020 which is executed directly after step S1060. In this case, step S1020 may comprise selecting a previously processed (tested) point of interest 12.

In other embodiments, the loop L1013 is modified in a way to include step S1020 which is executed directly after step S1080. In this case, step S1020 may comprise selecting a previously processed (tested) point of interest 12.

In one aspect, a weight, e.g., a real number comprised between 0 and 1, may be associated with each pair of points of interest involved in determining a projection model between two images. These weights may be used, without limitation, in ordering the pairs of points of interest and/or in determining a projection model (candidate) between the two images. In the latter case, the weights may be used by the cost function and/or by the optimization algorithm used by the minimization problem to determine a projection model (candidate). As an example, the cost function may represent a weighted quadratic sum of individual errors. According to this aspect, the weight associated with a pair of points of interest may be subjected to modification while iteratively determining the projection model. For example, a weight of a given pair may represent a reprojection error determined using a set of calibration pairs and a set of projection pair that exclude the given pair.

In another aspect, the weight associated with a pair of points of interest may be restricted to be a positive integer. In this case, when determining a projection model (candidate) between two images using a plurality of weighted pairs of points of interest, each pair is replicated a number of times corresponding to the associated weight. For example, if a pair has an associated weight equal to 3, then when determining a projection model (candidate) using this pair, 3 occurrences of this pair of points of interest are included in the list of pairs of points of interest used for determining the projection model (candidate).

Accordingly, the method of spatial calibration, according to the various embodiments of the invention, allows an efficient and precise spatial calibration between two images despite the inaccuracy that occurs when selecting points of interest on the two images. This is achieved by exploring for one or more points of interest some or all of its direct and distant neighbors on the corresponding image.

Further, using a displacement policy to manage the displacements of a point of interest allows the point of interest to approach its target position within a few displacements, which requires reduced resources in terms of storage and processing for its implementation.

In addition, by updating the displacement policy in a spirit of refinement, it is possible to significantly reduce the reprojection error, as the points of interest are brought closer to their respective target positions, with respect to a scenario where the displacement policy is not updated.

Figure 13 is a diagram illustrating an example of a hardware of a processing device 43 implementing a method for spatial calibration of a first image 10 against a second image 20, according to some embodiments of the invention. The processing device 43 may be coupled to an imaging device 41 configured to take one of the two images. The processing device 43 may be implemented with a bus architecture linking together various circuits including, without limitation, a processor 81, a computer-readable memory 82 and multiple components 83 to 88. Each of the components 83 to 88 is coupled to both the processor 81 and the computer-readable memory 82. A first component 83 represents an image acquisition unit configured to acquire one or more images by accessing, without limitation, an external database. A second component 84 represents an image reception unit configured to receive one or more images taken by means of the imagining device 41. The component 85 is a point of interest 12 selection unit configured to select or allow the selection of multiple points of interest on each of the two images. The component 86 represents a point of interest 12 matching unit configured to determine a plurality of pairs of points of interest by matching or allow the matching of the selected points of interest. The component 87 is a projection model determination unit configured to determine a projection model between the two images using the determined pairs of points of interest. The component 88 is calibration unit configured to calibration one of the two images against the other image by using the determined projection model. Of course, each of the components 83 to 88 may use the processor 81 and the computer-readable memory 82 to implement its function. As an alternative hardware of the processing device 43, only the processor 81 and the computer-readable memory 82 may be used to implementing a method for spatial calibration of a first image 10 against a second image 20.

While the present invention has been described with reference to embodiments, it is to be understood that the invention is not limited to the disclosed embodiments. It will be appreciated by those skilled in the art that various changes and modification might be made without departing from the scope of the invention, as defined in the appended claims. All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

In the preceding embodiments, the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

## Claims

1. A method for spatial calibration of a first image against a second image, the method comprising:

obtaining a plurality of pairs of points of interest, each pair matching a point of interest in the first image to a corresponding point of interest in the second image;
determining, iteratively, a projection model between the first and second images using pairs of points of interest of the obtained plurality; and
calibrating the first image based on the determined projected model;

wherein an iteration of the determining comprises:

displacing a position of a point of interest;
determining a projection model candidate using multiple pairs of points of interest, the multiple pairs including the point of interest with the displaced position; and
evaluating a reprojection error between the positions of the points of interest as projected using the projection model candidate and the corresponding points of interest; wherein the projection model is determined by choosing a projection model candidate based on the evaluated reprojection errors associated with a plurality of projection model candidates.

2. The method of claim 1, wherein an iteration of the determining comprises determining a projection model candidate using multiple pairs of points of interest as obtained at the obtaining step without displacing any position of one of their points of interest.

3. The method of claim 2, wherein the iterated steps of determining a projection model candidate and evaluating its associated reprojection error are repeated for different sets of positions of the plurality of points of interest of one of the first or second images until a completion condition is fulfilled.

4. The method of claim 3, wherein, for at least one point of interest, a set of positions are explored, the set of positions comprises an initial position of the point of interest as obtained and one or more other positions resulting from displacing a current position of the point of interest according to a displacement policy.

5. The method of claim 4, wherein the displacement policy defines a search area relatively to a reference position and one or more displacement lengths.

6. The method of claim 5, wherein the set of explored positions are the positions reachable using the one or more displacement lengths within the search area where the reference position is the initial position.

7. The method of claim 5, wherein the set of explored positions are the positions reachable using the one or more displacement lengths within a plurality of search areas determined iteratively, the reference position of an initial search area is the initial position and the reference position of a following search area is the position explored in a previous search area for which the corresponding reprojection error is the lowest or below a threshold.

8. The method of claim 6 or 7, further comprising selecting an enhanced position among the set of explored positions for a point of interest for which the corresponding reprojection error is the lowest or below a threshold.

9. The method of claim 8, further comprising, if the enhanced position is equal to the reference position for the point of interest:

updating the displacement policy; and repeating the iterated steps of determining a projection model candidate and evaluating its associated reprojection error with a new set of positions to be explored determined according to the updated displacement policy.

10. The method of claim 9, wherein updating the displacement policy comprises reducing the one or more displacement lengths and narrowing the search area.

11. The method of claim 3, wherein the completion condition is fulfilled if one or more of the following conditions is/are fulfilled:

- all positions allowed by the displacement policy are explored;
- error below a threshold;
- number of iterations reached;
- all positions of a search area explored;
- all set of positions explored.

12. The method of claim 8, wherein the completion condition is fulfilled if enhanced positions for all points of interest are equal to their corresponding reference positions.

13. The method of any one of the preceding claims, wherein a projection model candidate is determined by solving an optimization problem using the multiple pairs of points of interest.

14. The method of any one of the preceding claims, wherein the projection model is chosen as the projection model candidate associated with the lowest evaluated reprojection error.

15. A processing device configured to perform the method according to any one of claims 1 to 14.

16. A computer program comprising instructions which, when the program is executed by a computer, cause the computer to carry out the method according to any one of claims 1 to 14.

17. A computer-readable medium carrying the computer program according to claim 16.

**Patentansprüche**

1. Verfahren für eine räumliche Kalibrierung eines ersten Bildes gegenüber einem zweiten Bild, wobei das Verfahren Folgendes aufweist:

Erlangen einer Vielzahl an Paaren von Punkten von Interesse, wobei bei jedem Paar ein Punkt von Interesse in dem ersten Bild mit einem entsprechenden Punkt von Interesse in dem zweiten Bild übereinstimmt;
iterativ erfolgendes Bestimmen eines Projektionsmodells zwischen dem ersten und zweiten Bild unter Verwendung der Paare an Punkten von Interesse aus der erlangten Vielzahl; und Kalibrieren des ersten Bildes auf der Basis des bestimmten Projektionsmodells;
wobei eine Iteration des Bestimmens Folgendes aufweist:

Versetzen einer Position eines Punktes von Interesse;
Bestimmen eines Projektionsmodellkandidaten unter Verwendung einer Vielzahl an Paaren von Punkten von Interesse, wobei die Vielzahl an Paaren den Punkt von Interesse mit der versetzten Position umfasst; und
Auswerten eines Reprojektionsfehlers zwischen den Positionen der Punkte von Interesse, die unter Verwendung des Projektionsmodellkandidaten projiziert worden sind, und der entsprechenden Punkte von Interesse;
wobei das Projektionsmodell bestimmt wird, indem ein Projektionsmodellkandidat auf der Basis der ausgewerteten Reprojektionsfehler in Zusammenhang mit einer Vielzahl an Projektionsmodellkandidaten gewählt wird.

2. Verfahren gemäß Anspruch 1, wobei eine Iteration des Bestimmens Folgendes aufweist:
Bestimmen eines Projektionsmodellkandidaten unter Verwendung einer Vielzahl an Paaren von Punkten von Interesse, die bei dem Schritt zum Erlangen erlangt werden, ohne Versetzen irgendeiner Position von einem ihrer Punkte von Interesse.

**3.** Verfahren gemäß Anspruch 2, wobei die Iterationsschritte zum Bestimmen eines Projektionsmodellkandidaten und zum Auswerten seines zugehörigen Reprojektionsfehlers wiederholt werden für bestimmte Sätze an Positionen der Vielzahl an Punkten von Interesse von einem aus dem ersten oder zweiten Bild, bis eine Vollendungsbedingung erfüllt ist.

**4.** Verfahren gemäß Anspruch 3, wobei für zumindest einen Punkt von Interesse ein Satz an Positionen untersucht wird, wobei der Satz an Positionen eine Anfangsposition des Punktes von Interesse, der erlangt wird, und eine oder mehrere andere Positionen aufweist, die sich aus einem Versetzen einer gegenwärtigen Position des Punktes von Interesse gemäß einer Versetzstrategie ergibt.

**5.** Verfahren gemäß Anspruch 4, wobei die Versetzstrategie einen Suchbereich relativ zu einer Referenzposition und eine oder mehrere Versatzlängen definiert.

**6.** Verfahren gemäß Anspruch 5, wobei der Satz an untersuchten Positionen die Positionen sind, die unter Verwendung der einen oder mehreren Versatzlängen innerhalb des Suchbereiches erreichbar sind, bei dem die Referenzposition die Anfangsposition ist.

**7.** Verfahren gemäß Anspruch 5, wobei der Satz an untersuchten Positionen die Positionen sind, die unter Verwendung der einen oder mehreren Versatzlängen innerhalb einer Vielzahl an Suchbereichen erreichbar sind, die iterativ bestimmt werden, wobei die Referenzposition eines Anfangssuchbereiches die Anfangsposition ist und die Referenzposition eines folgenden Suchbereiches die Position ist, die in einem vorherigen Suchbereich untersucht wurde, für den der entsprechende Reprojektionsfehler der niedrigste oder unterhalb eines Grenzwertes ist.

**8.** Verfahren gemäß Anspruch 6 oder 7, der des Weiteren aufweist:
Wählen einer verbesserten Position aus dem Satz an untersuchten Positionen für einen Punkt von Interesse, für den der entsprechende Reprojektionsfehler der niedrigste oder unterhalb eines Grenzwertes ist.

**9.** Verfahren gemäß Anspruch 8, der des Weiteren Folgendes aufweist:
wenn die verbesserte Position gleich wie die Referenzposition für den Punkt von Interesse ist:

Auf-den-neuesten-Stand-bringen der Versatzstrategie; und

Wiederholen der Iterationsschritte zum Bestimmen eines Projektionsmodellkandidaten und Auswerten seines zugehörigen Reprojektionsfehlers mit einem neuen Satz an Positionen, die zu untersuchen sind, die gemäß der auf den neuesten Stand gebrachten Versatzstrategie bestimmt werden.

**10.** Verfahren gemäß Anspruch 9, wobei das auf-den-neuesten-Stand-bringen der Versatzstrategie Folgendes aufweist: Reduzieren der einen oder mehreren Versatzlängen und Verengen des Suchbereiches.

**11.** Verfahren gemäß Anspruch 3, wobei die Vollendungsbedingung erfüllt ist, wenn eine oder mehrere der folgenden Bedingungen erfüllt ist/sind:

- sämtliche Positionen, die durch die Versatzstrategie erlaubt sind, sind untersucht;
- Fehler unterhalb eines Grenzwertes;
- Anzahl an Iterationen erreicht;
- sämtliche Positionen eines Suchbereiches untersucht;
- sämtliche Sätze an Positionen untersucht.

**12.** Verfahren gemäß Anspruch 8, wobei die Vollendungsbedingung erfüllt ist, wenn verbesserte Positionen für sämtliche Punkte von Interesse gleich deren entsprechenden Referenzpositionen sind.

**13.** Verfahren gemäß einem der vorherigen Ansprüche, wobei ein Projektionsmodellkandidat bestimmt wird, indem ein Optimierungsproblem unter Verwendung der Vielzahl an Paaren von Punkten von Interesse gelöst wird.

**14.** Verfahren gemäß einem der vorherigen Ansprüche, wobei das Projektionsmodell als der Projektionsmodellkandidat in Zusammenhang mit dem niedrigsten ausgewerteten Reprojektionsfehler gewählt wird.

**15.** Behandlungsvorrichtung, die so aufgebaut ist, dass sie das Verfahren gemäß einem der Ansprüche 1 bis 14 ausführt.

**16.** Computerprogramm, das Befehle aufweist, die, wenn das Programm durch einen Computer ausgeführt wird, bewirken, dass der Computer das Verfahren gemäß einem der Ansprüche 1 bis 14 ausführt.

**17.** Computerlesbares Medium, das das Computerprogramm gemäß Anspruch 16 ausführt.

## Revendications

**1.** Procédé d'étalonnage spatial d'une première image par rapport à une seconde image, le procédé comportant :

l'obtention d'une pluralité de paires de points d'intérêt, chaque paire appariant un point d'intérêt dans la première image à un point d'intérêt correspondant dans la seconde image ;

la détermination, de manière itérative, d'un modèle de projection entre les première et seconde images à l'aide de paires de points d'intérêt de la pluralité obtenue ; et

l'étalonnage de la première image sur la base du modèle projeté déterminé ;

dans lequel une itération de la détermination comporte :

le déplacement d'une position d'un point d'intérêt ;

la détermination d'un modèle de projection candidat à l'aide de multiples paires de points d'intérêt, les multiples paires incluant le point d'intérêt avec la position déplacée ; et

l'évaluation d'une erreur de reprojection entre les positions des points d'intérêt telles que projetées à l'aide du modèle de projection candidat et les points d'intérêt correspondants ;

dans lequel le modèle de projection est déterminé en choisissant un modèle de projection candidat sur la base des erreurs de reprojection évaluées associées à une pluralité de modèles de projection candidats.

**2.** Procédé selon la revendication 1, dans lequel une itération de la détermination comporte la détermination d'un modèle de projection candidat à l'aide de plusieurs paires de points d'intérêt telles qu'obtenues à l'étape d'obtention sans déplacement de position de l'un de leurs points d'intérêt.

**3.** Procédé selon la revendication 2, dans lequel les étapes itérées de détermination d'un modèle de projection candidat et d'évaluation de son erreur de reprojection associée sont répétées pour différents ensembles de positions de la pluralité de points d'intérêt de l'une des première et seconde images jusqu'à ce qu'une condition d'achèvement soit remplie.

**4.** Procédé selon la revendication 3, dans lequel, pour au moins un point d'intérêt, un ensemble de positions sont explorées, l'ensemble de positions comporte une position initiale du point d'intérêt telle qu'obtenue et une ou plusieurs autres positions résultant du déplacement d'une position actuelle du point d'intérêt selon une politique de déplacement.

**5.** Procédé selon la revendication 4, dans lequel la politique de déplacement définit une zone de recherche par rapport à une position de référence et une ou plusieurs longueurs de déplacement.

**6.** Procédé selon la revendication 5, dans lequel l'ensemble de positions explorées sont les positions atteignables à l'aide des une ou plusieurs longueurs de déplacement au sein de la zone de recherche où la position de référence est la position initiale.

**7.** Procédé selon la revendication 5, dans lequel l'ensemble de positions explorées sont les positions atteignables à l'aide des une ou plusieurs longueurs de déplacement au sein d'une pluralité de zones de recherche déterminées de manière itérative, la position de référence d'une zone de recherche initiale est la position initiale et la position de référence d'une zone de recherche suivante est la position explorée dans une zone de recherche précédente pour laquelle l'erreur de reprojection correspondante est la plus faible ou inférieure à un seuil.

**8.** Procédé selon la revendication 6 ou 7, comportant en outre la sélection d'une position améliorée parmi l'ensemble de positions explorées pour un point d'intérêt pour lequel l'erreur de reprojection correspondante est la plus faible ou inférieure à un seuil.

**9.** Procédé selon la revendication 8, comportant en outre, si la position améliorée est égale à la position de référence pour le point d'intérêt :

la mise à jour de la politique de déplacement ; et

la répétition des étapes itératives de détermination d'un modèle de projection candidat et d'évaluation de son erreur de reprojection associée avec un nouvel ensemble de positions à explorer déterminé selon la politique de déplacement mise à jour.

**10.** Procédé selon la revendication 9, dans lequel la mise à jour de la politique de déplacement comporte la réduction des une ou plusieurs longueurs de déplacement et le rétrécissement de la zone de recherche.

**11.** Procédé selon la revendication 3, dans lequel la condition d'achèvement est remplie si une ou plusieurs des conditions suivantes sont remplies :

- toutes les positions autorisées par la politique de déplacement sont explorées ;
- une erreur est inférieure à un seuil ;
- un nombre d'itérations est atteint ;

- toutes les positions d'une zone de recherche ont été explorées ;
- l'intégralité d'un ensemble de positions ont été explorées.

12. Procédé selon la revendication 8, dans lequel la condition d'achèvement est remplie si des positions améliorées pour tous les points d'intérêt sont égales à leurs positions de référence correspondantes.

13. Procédé selon l'une quelconque des revendications précédentes, dans lequel un modèle de projection candidat est déterminé en résolvant un problème d'optimisation à l'aide des multiples paires de points d'intérêt.

14. Procédé selon l'une quelconque des revendications précédentes, dans lequel le modèle de projection est choisi comme modèle de projection candidat associé à l'erreur de reprojection évaluée la plus faible.

15. Dispositif de traitement configuré pour réaliser le procédé selon l'une quelconque des revendications 1 à 14.

16. Programme d'ordinateur comportant des instructions qui, lorsque le programme est exécuté par un ordinateur, amènent l'ordinateur à mettre en œuvre le procédé selon l'une quelconque des revendications 1 à 14.

17. Support lisible par ordinateur portant le programme d'ordinateur selon la revendication 16.

Figure 1A

Figure 1B

Begin

Obtain a plurality of pairs of points of interest — S210

Determine iteratively a projection model — S220

Calibrate the first image against the second image — S230

End

# Figure 2

L301

Displace a position of a point of interest — S310

Determine a projection model candidate — S320

Evaluate a reprojection error — S330

Completion condition fulfilled? — S340

No

Yes

Determine a projection model — S350

# Figure 3

43

Processing
Device

40

$Y_C$

$R_C$

44b

$Z_C$

$X_C$

41

$y_i$

$x_i$

44c

42

$Z_W$

44a

$R_W$

$X_W$

$Y_W$

## Figure 4

Determine an unexplored position for the point of interest according to a displacement policy — S510

Determine a projection model candidate using a set of pairs including the point of interest placed at the determined position — S520

Evaluate a reprojection error — S530

L501

No — End of exploration? — S540

Yes

End of exploration

## Figure 5

Figure 6A

Figure 7

Figure 6B

Figure 6C

Begin

Obtain a plurality of pairs of points of interest — S810

Select a point of interest from the obtained plurality of pairs — S820

Explore for the point of interest multiple positions determined by a displacement policy — S830

Select, among the explored positions, an enhanced position for the point of interest based on the evaluated reprojection errors — S840

L801

Selected position equal to the reference position? — S850
Yes

No

Set the reference position to the selected position and label the point of interest as "being improved" — S860

No

Completion condition fulfilled? — S870

Yes

Determine a projection model — S880

End

Figure 8

Figure 9

Figure 11A

Figure 11B

Figure 11C

Begin → Obtain a plurality of pairs of points of interest — S1010

Select a point of interest from the obtained plurality of pairs and obtain an initial displacement policy — S1020

L1012

Explore, for the point of interest, multiple positions determined by the displacement policy — S1030

Select, among the explored positions, an enhanced position for the point of interest based on the evaluated reprojection errors — S1040

L1011

Selected position equal to the reference position? — S1050
Yes
No

Set the reference position of the selected point of interest to the selected position — S1060

Yes

L1013

Maximum number of updates attained? — S1070
Yes
No

Update the displacement policy — S1080

Completion condition fulfilled? — S1090
No
Yes

Determine a projection model — S1100

End

Figure 10

Figure 12

Figure 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210295559 A